# EUROPEAN PATENT APPLICATION

(11) **EP 1 967 991 A1**
(43) Date of publication of application: **10.09.2008**
(21) Application number: 07015710.2
(22) Date of filing: 09.08.2007
(51) Int. Cl.: G06Q 10/00

(54) **Integrated system for managing aquisition of consumer goods and/or hiring services**

(30) Priority: 05.03.2007 US 682043
(71) Applicant: AUDIT BUSINESS SOLUTIONS, LTDA., Sao Paulo - SP - CEP01419-000 (BR)
(72) Inventor: Maranhão, Ramiro Mendes, São Paulo Sp-Cep.: 01419-000 (BR)
(74) Representative: Cruz Garcia, Maria Rosario da

(57) **Abstract**

System and method for managing purchases of goods or services include registering entities interested in receiving or providing the goods or services, enabling a potential receiver of goods or services to search the registered providers using search criteria including market segment defined by the potential receiver, and communicating to the potential receiver a list of the results of the search. The system enables potential receivers to select one of the registered providers from the list to deliver the goods or perform the services, enables the potential receiver to select one or more of the goods or services capable of being delivered by he selected provider, communicates to the selected provider placement of a request for goods and/or services by the receiver, and communicates a confirmation generated by the provider's acknowledgement of the receiver's communicated request to the receiver.

## Description

### FIELD OF THE INVENTION

The present invention relates to an integrated system for managing acquisition of consumer goods and/or hiring services and more specifically to an autonomous system for acquiring goods and/or services which provides interaction between the providers of the goods and/or services and users or potential purchasers of the goods and/or services in a virtual environment based on data stored in a database. The system may encompass any market segment.

### BACKGROUND OF THE INVENTION

Computerized systems that enable contracting for the delivery of services at a future time are known. However, none of those systems is capable of entirely automating the negotiating and delivery procedure including identification and selection of the service or services to be rendered or a certain market segment; identification and selection of the service or services that will be rendered; the possibility of making available payment means for the service rendered, and delivery conditions of the requested service.

Currently existing systems are basically limited to making available information about the providers of the services and about the services themselves rendered by these providers. Typically, the information is displayed according to a specific market segment, providing potential purchasers with the functionality of a simple search site. Some systems even provide for the possibility of performing the services requests. However, the prior art systems generally do not provide for, in their operational capacity, automatic transmission of a service request to the service providers, preventing the appropriate management of the parameters of compliance with the requests.

### OBJECTS AND SUMMARY OF THE INVENTION

It is an object of the present invention to provide a new and improved integrated system for managing acquisition of consumer goods and/or services.

It is another object of some embodiments of the present invention to provide a new and improved system for managing acquisition of goods and/or services utilizing a virtual environment which provides remote access to the providers of the goods and/or services and the purchasers of the goods/and/or services.

It is yet another object of some embodiments of the present invention to provide a new and improved system for managing purchase of goods and/or services which enables potential purchasers of the goods and/or services to review information from a plurality of providers of the same goods and/or services, i.e., goods and/or services having the same specifications or characteristics of the desired goods and/or services.

It is still another object of some embodiments of the present invention to provide a new and improved system for managing purchase of goods and/or services which allows for an entirely computerized transmission of information pertaining to a request for performance of services including an address at which the services are to be performed, and optionally allows for payment for the services to be rendered or performed.

In order to achieve at least one of these objects, a system in accordance with the invention includes means for registering entities interested in receiving or providing the goods or services, each registration from a potential receiver of goods or services including information about the entity and each registration from a potential provider of goods or services including information about the entity and a description of goods or services capable of being provided by the entity and one or more particular market segments in which the provider is capable of providing goods or services, means for enabling a potential receiver of goods or services to search the registered providers using search criteria including market segment defined by the potential receiver, and means for communicating to the potential receiver a list of the results of the search. Further, the system includes means for enabling the potential receiver to select one of the registered providers from the list to deliver the goods or perform the services, means for enabling the potential receiver to select one or more of the goods or services capable of being delivered by the selected provider, means for communicating to the selected provider placement of a request for goods and/or services by the receiver, and means for communicating a confirmation generated by the provider's acknowledgment of the receiver's communicated request to the receiver.

The system can be implemented entirely in a virtual environment, e.g., over the Internet, using a server as the device on which the managing software is installed, which server communicates with the potential receivers and the service providers. A potential receiver therefore is able to access information from multiple service providers and a service provider is able to access information from multiple suppliers. Data about potential service providers and suppliers can be limited by search criteria selected by the searching party.

Registration of the providers can include visual identification, the visual identification being provided to the potential receivers along with the list of results of the search. Registration of the providers can include an address, an e-mail address, and the costs of the goods and/or services provided by the provider, this information being provided to the potential receivers along with the list of results of the search. Access to the system can be limited to registered entities.

In some embodiments, a password is assigned or given to each registrant. Potential receiver can also optionally pay for the selected goods or services to be delivered by the selected provider. The transaction between the receiver and the service provider can be registered by the system, i.e., stored in a memory unit of the server on which the system is running, after communication of the confirmation by the provider.

As noted above, a confirmation generated by the provider's acknowledgement of the receiver's communicated request can be communicated to the receiver, which could entail communicating a confirmation from the provider to the system and communicating another confirmation from the system to the receiver only after the confirmation is received from the provider.

The term for completion of the transaction can be noted when registering the transaction and the system designed or programmed to automatically request the receiver to complete a performance questionnaire about the provider after delivery of the goods or services by the provider and completion of the transaction.

The system can also enable the providers to form and maintain an automatic exhibition channel through the system to show the goods and services capable of being delivered by the providers, whereby the exhibition channel is continually viewable by potential receivers.

The system can also enable reception of requests from potential receivers to the system through any electronic data transmission means. Requests placed by the receivers can be printed by one or more printers available to the providers.

A method for managing acquisition of goods and/or services in accordance with the invention includes registering entities interested in receiving or providing the goods or services, each registration from a potential receiver of goods or services including information about the entity and each registration from a potential provider of goods or services including information about the entity and a description of goods or services capable of being provided by the entity and one or more particular market segments in which the provider is capable of providing goods or services, enabling a potential receiver of goods or services to search the registered providers using search criteria including market segment defined by the potential receiver, communicating to the potential receiver a list of the results of the search, enabling the potential receiver to select one of the registered providers from the list to deliver the goods or perform the services, enabling the potential receiver to select one or more of the goods or services capable of being delivered by the selected provider, communicating to the selected provider placement of a request for goods and/or services by the receiver, and communicating a confirmation generated by the provider's acknowledgement of the receiver's communicated request to the receiver. Variations to the method include those of the system described above.

### BRIEF SUMMARY OF THE DRAWINGS

For a better understanding of the integrated system of relationship management for the acquisition of consumer goods and/or hiring services herein proposed, references are made to the drawings attached, as follows:
FIG. 1 shows an example of a functioning scheme of an integrated system of relationship management in accordance with the invention;
FIG. 2 shows a block diagram of the functionality of an integrated system of relationship management in accordance with the invention;
FIG. 3 shows a block diagram of a first example of the receipt of the request through a personal computer connected to a printer;
FIG. 4 shows a block diagram of a second example of the receipt of the request through a mobile telephone connected to a printer;
FIG. 5 shows an example of the registration screen of the user in an integrated system of relationship management in accordance with the invention;
FIG. 6 shows an example of the registration screen of the services provider and the supplier in an integrated system of relationship management in accordance with the invention;
FIG. 7 shows an example of a search screen in an integrated system of relationship management in accordance with the invention;
FIG. 8 shows an example of the results screen of a search for restaurants in an integrated system of relationship management in accordance with the invention;
FIG. 9 shows an example of the screen of services specification of a restaurant selected in the search of an integrated system of relationship management in accordance with the invention;
FIG. 10 shows a system screen, providing an example of the confirmation of the request sent to the user; and
FIG. 11 shows a system screen, providing an example of the satisfaction report or questionnaire to be answered by the user.

### DETAILED DESCRIPTION OF THE INVENTION

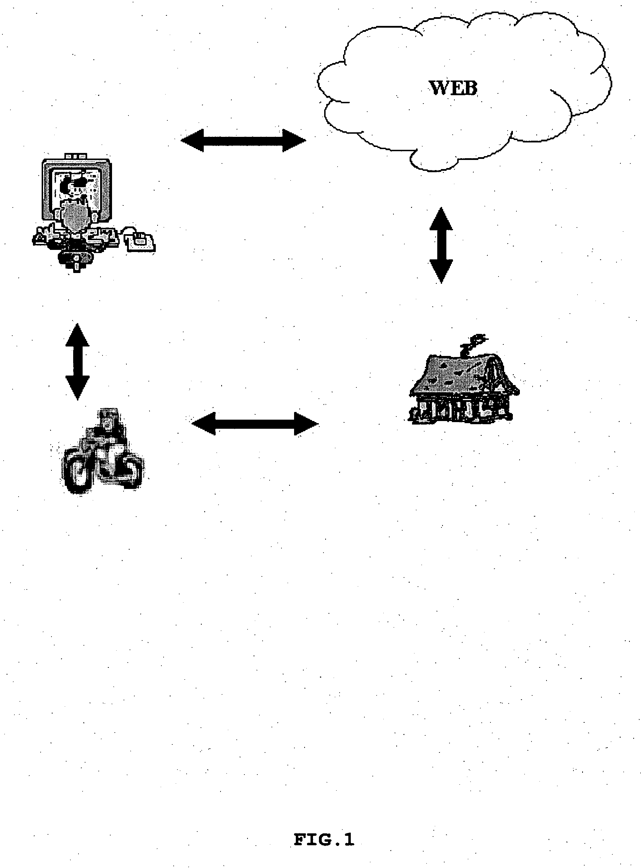

Referring to the accompanying drawings wherein like reference numbers refer to the same or similar elements, as shown in FIG. 1, the system in accordance with the invention allows for connection in a virtual environment of the Internet including for example, a user in front of a computer, a motorcycle rider who could be a supplier of goods or provider of services, and a residence at which the goods are to be delivered or the services to be performed.

The integrated system for management of the acquisition or receipt of consumer goods and/or services requires registration of entities interested in taking advantage of the benefits provided by system. These entities can be those which provide goods (for example, suppliers), those which provide services (for example, service providers or renderers), those which provide both, goods and services, those seeking goods (for example, users), those seeking services (for example, consumers) and those seeking both goods and services. Those seeking goods and/or services will be collectively referred to as users whereas those providing goods and/or services will be collectively referred to as providers. Suppliers will generally those entities which supply goods to the providers, although they may also provide services to the providers. Interaction between the users and the providers can take place in a manner similar to the interaction between the providers and the suppliers.

The registration process can differ depending on whether a user or service provider is registering. Registration for a user entails providing for example identification data, address and e-mail address. Registration for service providers may entail providing, for example, identification data, a description of service and services capable of being rendered thereby. Optionally, the registration can include a visual identification of the services, their costs, a physical address and electronic address and an e-mail of the providers and suppliers.

The system in accordance with the invention advantageously incorporates all functions that enable complete automation of the entire routine which involves the remote scheduling or hiring of services. Specifically, the entity seeking to schedule or hire specific services can enter that information into a database, after registering, and the database contains the identification of entities capable of providing the requested services which are in turn provided to the entity seeking the services. This involves crossing the information contained in the database of the system.

Information contained in the database includes various items, for example, organized based on a certain market segment. A list of providers can be set forth grouped according to the services they provide. Identification information of selected service provider(s) can also be set forth. Identification of characteristics or parameters of the services to be rendered or capable of being rendered or performed could also be set forth.

Additional functions incorporated into the system include the possibility of enabling selection of one or more desired services, the ability to generate and receive a confirmation for sending the request to the service provider, the ability to have available means for payment for the requested service, and the ability to generate and transmit or send a voucher of payment to the service provider and information to the user or service requester about the delivery conditions of the requested service or services. All of these functions can be made available through an interface generated by the system, by means of which the users will be able to access the identification data, not only of the service providers, but also information about the services rendered by service providers (once such information is entered by the service providers themselves into the database).

In this manner, users interested in obtaining services provided for by the system, i.e., by registered service providers, as well as service providers interested in making their services available to potential customers or users through the system, must register themselves. Initially, in the case of users, the users must inform the system of their personal identification information, including but not limited to their physical and electronic addressed and e-mail address, and, in the case of service provider, their identity information and the description of the services rendered. As noted above, optional visual identification can also be provided along with the amounts charged or cost of various services offered by the service provider, their physical and electronic addresses and their e-mail address.

After registration, a security feature is used in order to prevent unauthorized use of the system. In one embodiment, the security system involves assigning each interested party a password which will identify them in the system. Thus, consumers, service providers and suppliers will be provided with a password to identify them in the system for the current and future transactions.

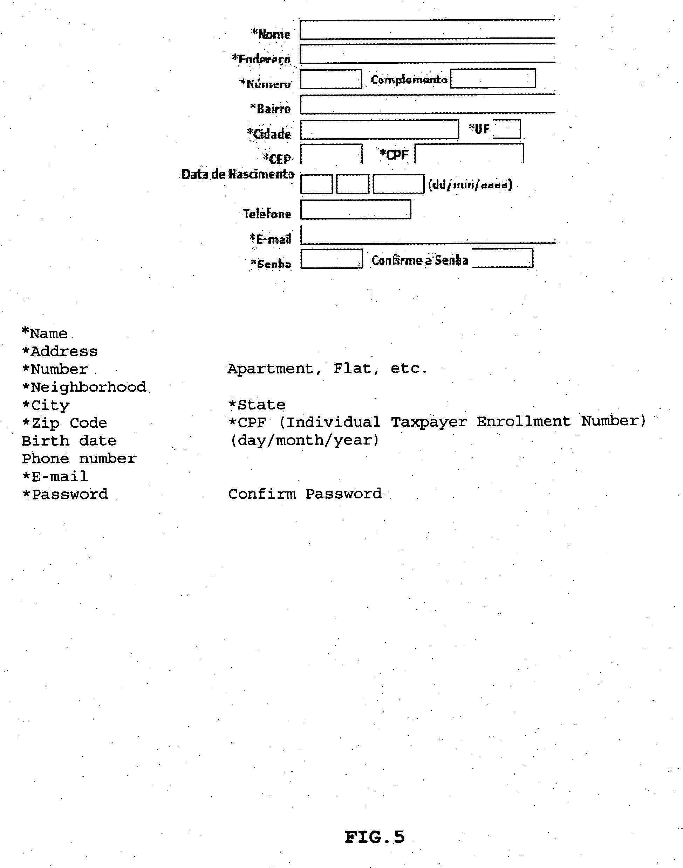

FIG. 5 shows an entry screen for an individual user of the system with entry fields for the individuals name, address, birth date, phone number, e-mail address and a password. The same screen can also be used after the initial registration.

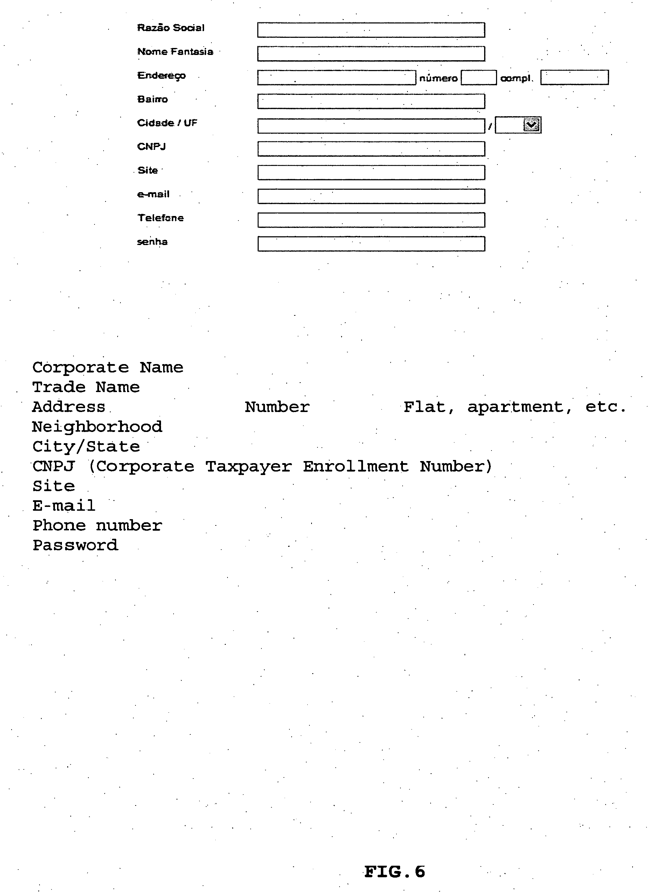

FIG. 6 shows an entry screen for a company which might be a service provider or supplier using the system which entry fields for corporate name, trade name, address, corporate taxpayer enrollment number, website, phone number, e-mail address and a password. The same screen can also be used after the initial registration.

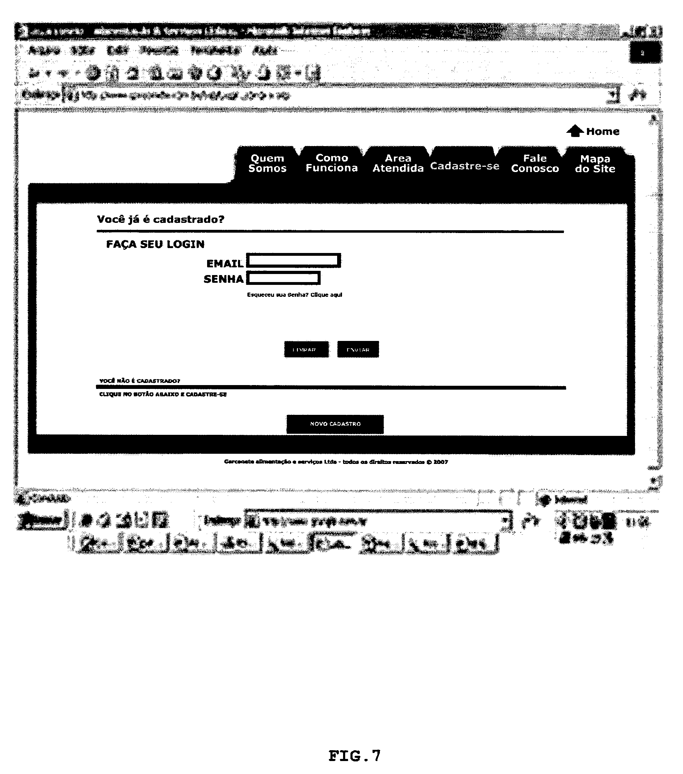

FIG. 7 is a search screen, discussed below, wherein items of information are entered to search for service providers or suppliers.

When accessing the system, each party must, at first, indicate the market segment in which they want to obtain or hire services and the system will make available a list of the service providers or suppliers registered for that market segment. Formation of a list can depend on any number of factors or parameters, either defined by the user himself, geographic limitations such as the location of the service provider, monetary limitations, etc. Thus, after searching in its database, the system will present a list of one or more service providers registered in the system which comply with the specifications of the user. Once a service provider is selected by the user, the options of services offered by the service provider can be displayed to the user so that the user may then select the particular service he wishes to hire, specifying the items and amounts, and that information is received by the system.

In order to render the search more efficient, additional information about the services and/or service providers can be made available to potential purchasers thereof. If a potential purchaser selects a particular service provider, additional information about that service provider can be displayed to the user. The potential purchaser is provided with the ability to select the service he wishes to receive, specifying the items and amounts, and that information is received by the system. The term or time for the user to enter into a transaction for the services or goods from the service provider or supplier can be limited to a duration set by the system and/or by the user.

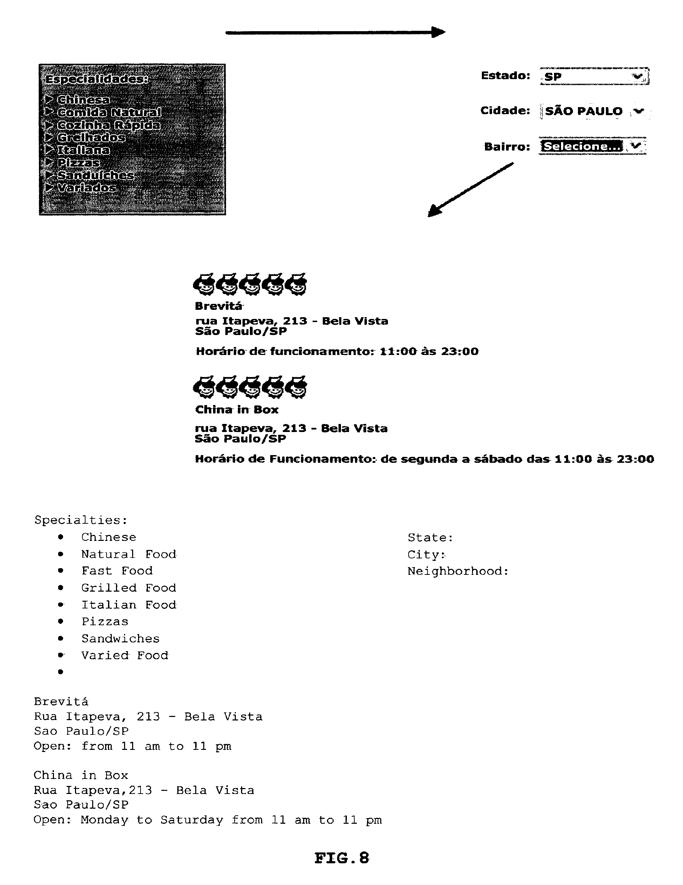

FIG. 8 shows a screen shot that might appear during a search showing information about a service provider registered with the system, in this case, a restaurant. It would thus be the result screen provided by a system in accordance with the invention. The information includes a state, city and neighborhood in which the restaurant is located, specialties of the restaurant, and its address and hours.

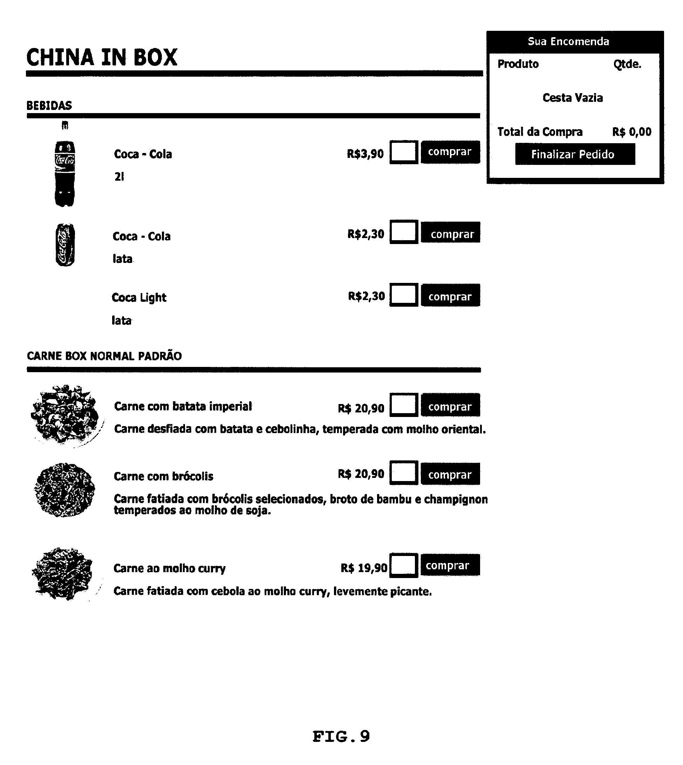

FIG. 9 shows another screen shot showing menu items and prices for the menu items.

In one embodiment, at the request of the user, the system may provide means to enable the user to pay for the requested service either in advance or at the time of delivery or performance of the service. It is possible that the system is designed so that only after the request is made, particular data about the user is made available to the selected service provider or supplier. The service provider or supplier, having received the request from the user via the system, can then send a confirmation to the system with the information concerning the cost of the requested service and/or products and the delivery conditions. The term or time for the service provider or supplier to respond to the request can be limited to a duration set by the system and/or by the user.

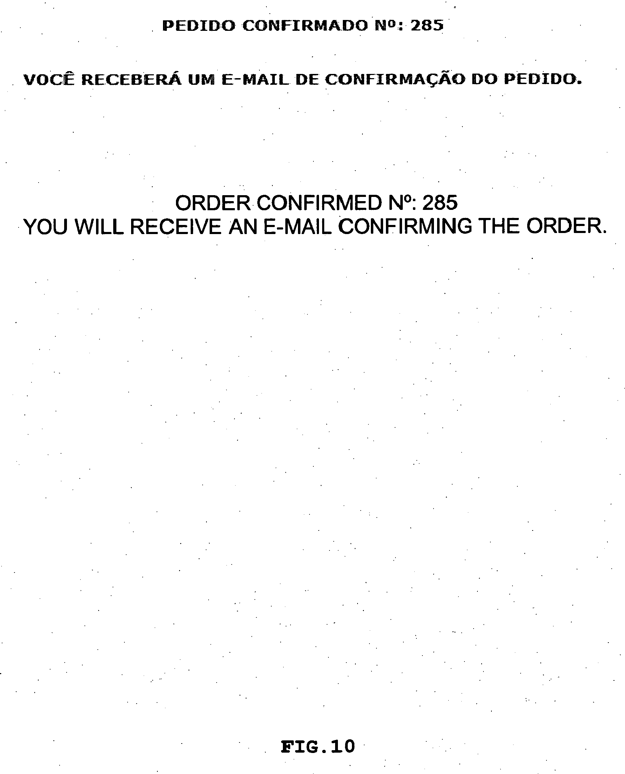

The system, after having received the confirmation generated by the service provider or supplier, will in turn send a confirmation to the interested party with that information provided by the service provider or supplier, thereby concluding the request. The order confirmation can be sent as shown in. FIG. 10, which is also indicative of a subsequent e-mail to be sent to confirm the order. Data relating to the transaction between the user and the service provider or supplier selected by the user can be registered in a memory component of the system.

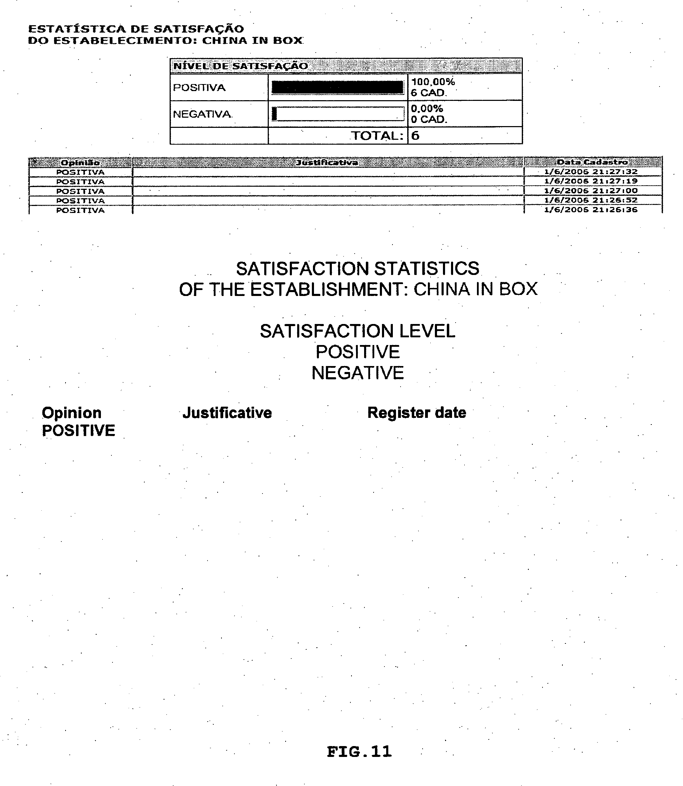

Optionally, once the term established by the service provider or supplier to comply with the request is ended, the system will send a questionnaire to the interested party so that he or she can assess the functionality of the system, which will be used to rank the performance of the service providers or suppliers through the level of satisfaction of the interested party in regards to the service rendered. A sample questionnaire is shown in FIG. 11.

The ranked performance of the service providers and suppliers can be made available by the system together with the list of service providers or suppliers generated as a result of the search carried out by the interested party or user, helping him when he is making his selection.

In order to take advantage of the benefits provided by the system, the service providers and the suppliers, in addition to being registered, also must have their technical character of implementation of the system solved so that, in this manner, it is possible to establish an automatic exhibition channel of their products and/or services. This is arranged so that the automatic exhibition channel on the system can always be updated by the service providers or suppliers in regards to inclusions, exclusions and changes in the services rendered, as well as the values charged for those services. Each service provider can thus use the interactive feature to change their exhibition channel.

The system implementation process concerns how requests made by the users or interested parties are sent to the service providers and suppliers. That is, the requests can be made and sent through any electronic means for data transmission. However, the receiving manner of those requests must be configured, something that happens at the moment the system is implemented, and takes place in accordance with the particularities of each service provider or supplier. It is preferred though that the request is always received through remote means, by any electronic means of data reception, which is likely to be attached to a printer, and also has a mechanism to send a message confirming the receipt of the request.

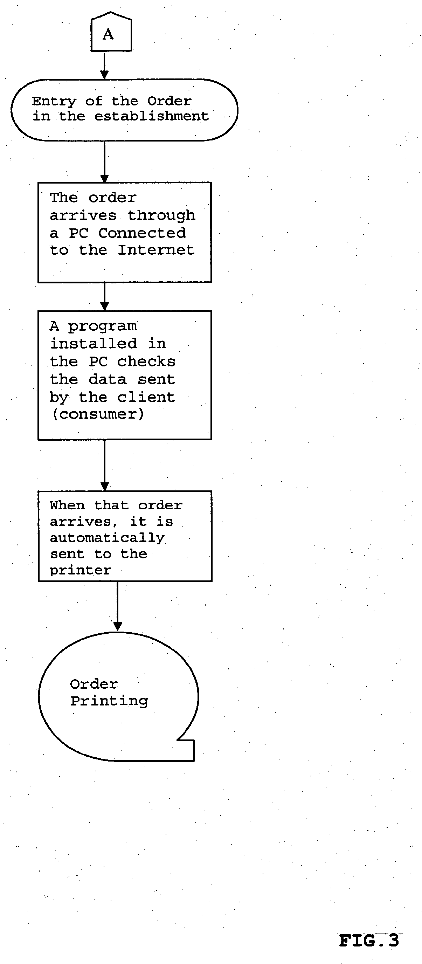

Referring to Fig. 3 which illustrates the manner in which an order is placed and printed by the service provider or supplier, the order is entered in an establishment, e.g., a terminal, and then arrives in a central station maintained by the system, i.e., a server, through a personal computer (PC) connected to the Internet. A program installed in the PC then checks the data sent by the client (consumer), this data relating to a request for goods and/or services by a service provider or supplier. When that order arrives, it is automatically sent to the printer to be printed out.

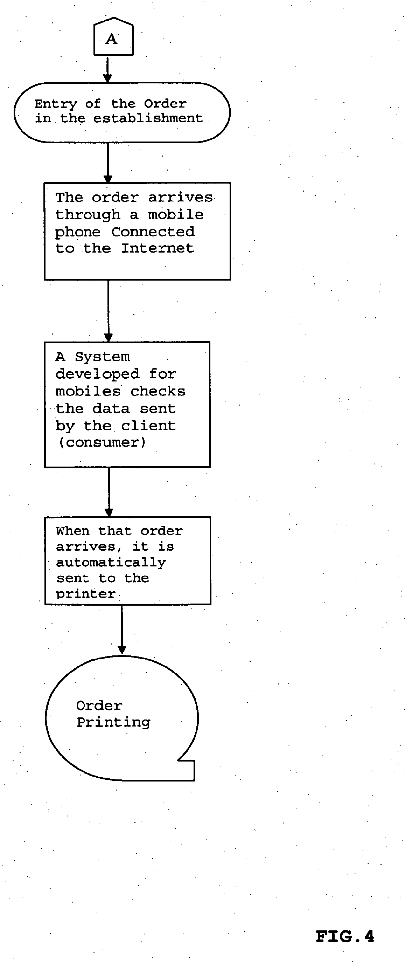

Similarly, Fig. 4 illustrates the manner in which an order is placed through a different type of ordering channel, namely, a mobile telephone, and printed by the service provider or supplier. The order is entered in an establishment, i.e., an electronic handheld device, and then arrives in a central station maintained by the system, i.e., a server, through a mobile telephone connected to the Internet. A system developed for, inter alia, mobile telephones checks the data sent by the client (consumer), this data relating to a request for goods and/or services by a service provider or supplier. When that order arrives, it is automatically sent to the printer to be printed out.

Once the registration and the system implementation are concluded, the supplier and the service provider can offer their products and/or services and receive requests for those products and/or services, as well as control the procedures developed in the system through an interface exclusively accessed by the registered service providers and suppliers.

The integrated system of relationship management for the acquisition of consumer goods arid/or hiring services herein proposed also incorporates an interface which automates the processes developed within its supply chain. The system includes a tool which allows for interaction between service providers and their supply providers (suppliers), through which the service providers can, from a specification supplied by the system, show the need for replenishing the stock of certain goods or even the rendering of some kind of services, and proceed to its request. To this end, the service provider can access the system, indicate the market segment in which he wants to hire the supplier and the system will make available a list of the suppliers registered for the selected market segment. The list can also be determined based on parameters defined by the service provided himself.

Based on the supplier selected, the system can make available, i.e., display to the service provider requesting goods and/or services from the supplier, options for products and services offered by the supplier so that, for example, the service provider may select the service he wishes to hire or receive or have performed for him. That information is received by the system and, if the service provider wishes, it may provide means so that he can pay for the hired service, or alternatively, make provisions for payment at the time of the delivery or rendering of the services. In one embodiment, only after the request is made by the service provider is data relating to that request made available to the selected supplier. Upon receipt of the request, the suppler can send a confirmation to the system with the information concerning the cost of the hired service and the delivery conditions. The system can be designed so that, after having received the confirmation of the supplier, it will send a confirmation to the service provider with that information, concluding the request. Data concerning the transaction between the service provider and the supplier can then be registered by the system, i.e., in a memory of the system.

When the term established by the supplier to comply with the request is ended, or the transaction is concluded, the system can be designed to send a questionnaire to the service provider so that he can assess the functionality of the system, which will be used to rank the performance of the suppliers through the level of satisfaction of the service provider in regards to the compliance with his request. The ranked performance can be made available by the system together with the list of suppliers provided as a result of the search carried out by the service provider, thereby aiding the service provider when making a selection of service providers from a list of the same after entering search criteria for a particular service he or she seeks to obtain.

As noted above, in order to take advantage of the benefits provided by the system, the suppliers, in addition to being registered, also must have their technical character of implementation of the system solved (i.e., be connected to the system for example through the Internet and have the appropriate interface and communications software). In this manner, it is possible to establish an automatic exhibition channel of their products and/or services. This can be arranged so that the automatic exhibition channel on the system can always be updated by the suppliers in regards to inclusions, exclusions and changes in the goods deliverable and/or services renderable, as well as the values charged for those goods and/or services. Each supplier can thus use the interactive feature to change their exhibition channel.

The system implementation process concerns how requests made by the users or interested parties are sent to the service providers and suppliers. That is, the requests can be made and sent through any electronic means for data transmission. However, the receiving manner of those requests must be configured, something that happens at the moment the system is implemented, and takes place in accordance with the particularities of each service provider or supplier. It is preferred though that the request is always received through remote means, by any electronic means of data reception, which is likely to be attached to a printer, and also has a mechanism to send a message confirming the receipt of the request.

Once the registration and the system implementation are concluded, the supplier can offer his products and/or services and receive requests for those products and/or services, as well as control the procedures developed in the system through an interface exclusively accessed by the suppliers registered.

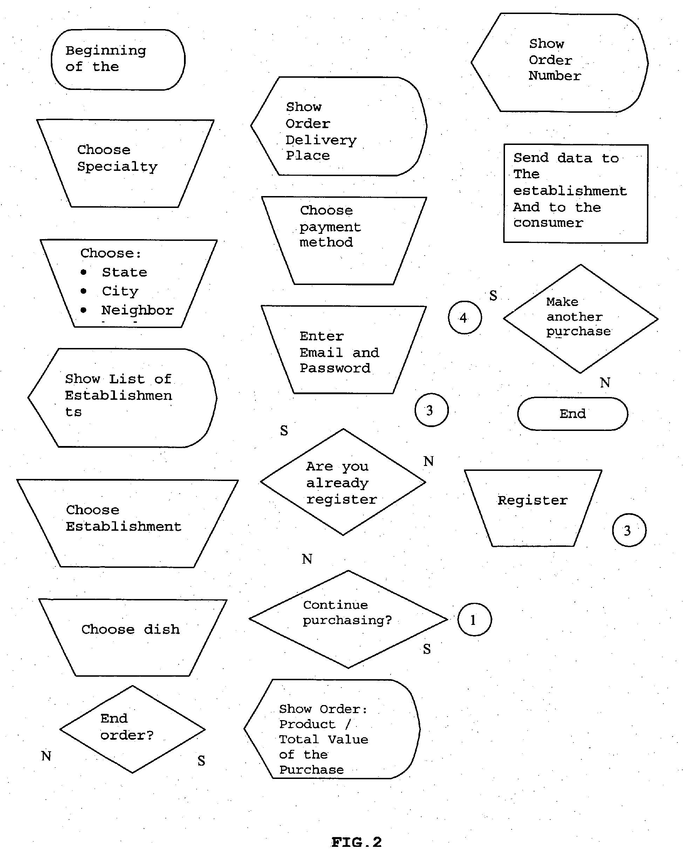

Referring now to FIG. 2, an exemplifying method of managing the purchase or acquisition of goods or services in accordance with the invention will be described with reference to ordering food from an establishment such as a restaurant. A search is started and a specialty is chosen, along with a state, city, and/or neighborhood. A list of establishments meeting the search criteria is then generated by the computer running the system and communicated to the searcher through the internet or other computer network and displayed by the searcher's device to the searcher, the searcher's device being a personal computer, handheld device, mobile telephone, etc. The searcher, using his device, then chooses one of the establishments and a list of dishes is displayed capable of being provided by the selected establishment and the user chooses one or more dishes and indicates if the order is ended. Transmission of the establishments and dishes provided thereby is through any existing transmission network, including those connected to the Internet so that they can communicate with the server on which the system is installed. If so, the order product/total value of the purchase is displayed to the user. The user is provided with an opportunity to continue purchasing. If the user is not registered, then the user may be required to register to continue using the system. If so, the user enters their e-mail and password, chooses a payment method and the order delivery place is identified. If the user wants to make another purchase after entering their e-mail and password, they can make an additional purchase. If not, the data is sent to the establishment and to the consumer, i.e., the confirmation of order and payment, and an order number is displayed.

While particular embodiments of the invention have been shown and described, it will be obvious to those skilled in the art that changes and modifications may be made without departing from the invention in its broader aspects, and, therefore, the aim in the appended claims is to cover all such changes and modifications as fall within the true spirit and scope of the invention.

## Claims

1. An integrated and automated system for managing acquisition of goods and/or services, **characterizing in that** comprises:
means for registering entities interested in receiving or providing the goods or services, each registration from a potential receiver of goods or services including information about the entity and each registration from a potential provider of goods or services including information about the entity and a description of goods or services capable of being provided by the entity and one or more particular market segments in which the provider is capable of providing goods or services;
means for enabling a potential receiver of goods or services to search the registered providers using search criteria including market segment defined by the potential receiver;
means for communicating to the potential receiver a list of the results of the search;
means for enabling the potential receiver to select one of the registered providers from the list to deliver the goods or perform the services;
means for enabling the potential receiver to select one or more of the goods or services capable of being delivered by the selected provider;
means for communicating to the selected provider placement of a request for goods and/or services by the receiver; and
means for communicating a confirmation generated by the provider's acknowledgment of the receiver's communicated request to the receiver.

2. The system of claim 1, **characterized in that** the registration of the providers includes visual identification, the visual identification being provided to the potential receivers along with the list of results of the search.

3. The system of claim 1, **characterized in that** the registration of the providers includes an address, an e-mail address, and the costs of the goods and/or services provided by the provider, this information being provided to the potential receivers along with the list of results of the search.

4. The system of claim 1, **characterized in that** further comprises means for assigning a password to each registrant.

5. The system of claim 1, **characterized in that** further comprises means for enabling the potential receiver to pay for the selected goods or services to be delivered by the selected provider.

6. The system of claim 1, **characterized in that** further comprises means for registering the transaction between the receiver and the service provider after communication of the confirmation by the provider.

7. The system of claim 1, **characterized in that** the means for communicating a confirmation generated by the provider's acknowledgment of the receiver's communicated request to the receiver comprise means for communicating a confirmation from the provider to the system and means for communicating another confirmation from the system to the receiver only after the confirmation is received from the provider.

8. The system of claim 1, **characterized in that** further comprises means for noting the term for completion of the transaction and means for automatically requesting the receiver to complete a performance questionnaire about the provider after delivery of the goods or services by the provider and completion of the transaction.

9. The system of claim 1, **characterized in that** further comprises means for enabling the providers to form and maintain an automatic exhibition channel through the system to show the goods and services capable of being delivered by the providers, whereby the exhibition channel is continually viewable by potential receivers.

10. The system of claim 1, **characterized in that** further comprises means for enabling reception of requests from potential receivers to the system through any electronic data transmission means.

11. The system of claim 1, **characterizing in that** further comprises printing means for printing requests placed by the receivers, the printing means including one or more printers available to the providers.

12. The system of claim 1, **characterized in that** access to the system is limited to registered entities.

13. A method for managing acquisition of goods and/or services,
**characterized in that** comprises:
registering entities interested in receiving or providing the goods or services, each registration from a potential receiver of goods or services including information about the entity and each registration from a potential provider of goods or services including information about the entity and a description of goods or services capable of being provided by the entity and one or more particular market segments in which the provider is capable of providing goods or services;
enabling a potential receiver of goods or services to search the registered providers using search criteria including market segment defined by the potential receiver;
communicating to the potential receiver a list of the results of the search;
enabling the potential receiver to select one of the registered providers from the list to deliver the goods or perform the services;
enabling the potential receiver to select one or more of the goods or services capable of being delivered by the selected provider;
communicating to the selected provider placement of a request for goods and/or services by the receiver; and
communicating a confirmation generated by the provider's acknowledgment of the receiver's communicated request to the receiver.

14. The method of claim 13, **characterized in that** further comprises assigning a password to each registrant.

15. The method of claim 13, **characterized in that** further comprises enabling the potential receiver to pay for the selected goods or services to be delivered by the selected provider.

16. The method of claim 13, **characterized in that** further comprises registering the transaction between the receiver and the service provider after communication of the confirmation by the provider.

17. The method of claim 13, **characterized in that** further comprises noting the term for completion of the transaction and automatically requesting the receiver to complete a performance questionnaire about the provider after delivery of the goods or services by the provider and completion of the transaction.

18. The method of claim 13, **characterized in that** further comprises enabling the providers to form and maintain an automatic exhibition channel to show the goods and services capable of being delivered by the providers, whereby the exhibition channel is continually viewable by potential receivers.

19. The method of claim 13, **characterized in that** further comprises enabling reception of requests from potential receivers through any electronic data transmission means.

20. The method of claim 13, **characterized in that** access to the system is limited to registered entities.
